# EUROPEAN PATENT APPLICATION

(11) **EP 0 524 413 A1**
(43) Date of publication of application: **27.01.1993**
(21) Application number: 92109845.5
(22) Date of filing: 11.06.1992
(51) Int. Cl.: B28B 7/20, B29C 33/44

(54) **A mould for ceramic tiles affording a re-entrant groove in the reverse face for mechanical fixing purposes, the relative tile and a relative fixing device**

(30) Priority: 25.06.1991 IT MO910090; 25.06.1991 IT MO910091
(71) Applicant: NASSETTI ETTORE S.p.A., I-20090 Trezzano S/N Milano (IT)
(72) Inventor: Nassetti, Roberto, I-20080 Zibido S. Giacomo, Milano (IT)
(74) Representative: Gardi, Giuliano

(57) **Abstract**

The mould is designed for pressing ceramic wall and floor tiles (26) affording one or more re-entrant grooves (28) or recesses (31) in the reverse face, of which the undercut surfaces are suitably angled in relation to an axis normal to the fixing plane and of width as much as equal to the depth of the tile. The ridged reaction plate (10) of the bottom die (3) is capable of vertical motion and affords one or more upwardly projecting longitudinal inserts (21) with angled lateral surfaces by which the re-entrant profile is generated; the inserts are forced to descend during the forcing stroke in relation to the bottom die plate (10) through a distance equivalent to half the stroke or thereabouts, and thereafter, elevated marginally by springs (24) just enough to distance the tile from the top surface of the bottom die and enable its removal in a sideways direction.

The back of the single tile, ceramic or otherwise, obtained with the mould affords one or more grooves running either the full length of the body or less, of which the cross sectional profile exhibits parts undercut from the reverse face to significant and even bold depths, in relation to the thickness of the tile, and is of geometry such as to accommodate a close-fitting longitudinal anchor strip (38) of of a relative fixing device, having matching profile; the rear face of the strip has flexible lugs (37) that can be snapped firmly into and, if necessary, removed from corresponding slots (36) fashioned in a longitudinal support (35) of ridged profile secured beforehand to the subsurface.

## Description

The invention relates to a mould for ceramic tiles affording an undercut groove in the reverse face for mechanical fixing purposes, to the relative tile and to a relative fixing device, that is, an apparatus comprising dies and mounted in a press, by means of which to form ceramic tile bodies with a longitudinal groove in the reverse face that enables fixing to a wall or floor using mechanical components in such a way as to disallow removal of the tiles in a direction normal to the fixing plane; the tile itself and a relative fixing device likewise constitute subject matter of the invention.

The prior art embraces no ceramic tile moulds able to produce surfaces undercut in relation to the direction in which the mould opens and closes, i.e. re-entrant grooves extending wholly or partly along the length of the tile and exhibiting cross section of predetermined profile and geometry as required to match the mechanical fixing components. Instead, there exists only the method of applying an insert of flexible and elastically deformable material to the face of the bottom die or of the forcing die in a conventional mould, for example a piece of rubber initially parallelepiped or cylindrical in shape which, during the forcing stroke, is subjected to compressive stress in the transverse direction to the point at which a longitudinal cavity is formed in the pressed material, thus creating a bilateral re-entrant profile that increases progressively in section with an increase in the distance separating the face of the insert from the face of the mould; in the case of a cylindrical insert, the section of a groove typically obtainable is roughly that of an open-sided trapezium with sides diverging into the mould. The insert regains its former shape once the compressive force is removed, and being returned thus to dimensions such as allow its extraction transversely from the impressed groove, the mould can be opened in the normal way without defacing the newly formed undercut surfaces at the edges meeting with the reverse face of the ceramic body.

It is not possible, using a mould of this type with flexible inserts, to invest the ceramic body with undercut surfaces of significant transverse depth, for example equal or approximating to the thickness of the tile, whereas this constitutes a requirement if a groove is to be formed with undercut surfaces of strength sufficient to interact with a device for fixing the tile mechanically to the relative subsurface. Also, the geometry of the re-entrant cross section obtainable with such a mould will never provide the precision required to enable exploitation of the undercut surfaces in a matched fit with such mechanical fixing means, where rather more close tolerances must be adopted. Finally, the flexible inserts commonly in use are rubber for the most part, a material which wears and perishes and therefore requires frequent replacement, besides occasioning a certain amount of reject production when the wear becomes particularly noticeable.

Furthermore, the prior art embraces ceramic tiles fixed by the conventional method of applying a bed of mortar or adhesive to the wall or floor, and then sinking the reverse side of the ceramic tile body into the bed; the body itself affords retaining elements such as a rough-textured face, projections or recesses in a variety of shapes, which serve to define a fixing surface of non-continuous profile. Such features can be incorporated only into extruded tiles, using a mix of high moisture content moreover, 18-20% for example, and may appear as a tight formation of dovetail grooves affording no great depth, creating a substantially corrugated fixing surface in which the grooves are undercut, therefore re-entrant, to ensure penetration into the mortar or adhesive and thus inhibit movement of the tile in any direction while the mass of bonding material is allowed to set and harden.

There are also ceramic tiles designed for fixing mechanically, in which the middle band of the rear face affords a pair of parallel notches cut with a grinding disc; the notches converge onto the median axis of the exposed face and serve to accommodate two external upper fins of a flexible metal anchor element of which two internal lower members are insertable in corresponding sockets afforded by the body of a longitudinal anchor strip secured to the subsurface. Such systems are confined essentially to do-it-yourself applications.

Finally, the art embraces dry-fixing tiles provided with flexible plugs on the rear face, insertable into a fabricated metal frame fastened to the wall.

As regards the traditional methods of fixing and laying tiles with a bonding material, these tend to involve a high cost, more especially in the case of exterior applications with large expanses, given the considerable quantities of mortar or adhesive required; once the tiles are secured rigidly to the subsurface, moreover, the ceramic body can fracture as a result of settlement or subsidence affecting the building, or due even to extreme temperatures, particularly where the supporting structure is a metal framework.

Furthermore, extruded tiles are notoriously subject to dimensional irregularities, mainly by reason of their high moisture content and of the consequent evaporation which occurs during firing; this gives rise to notable tensions in contraction and results on occasion in rupture of the ceramic body. Again, the production cycle involved in manufacturing such tiles is somewhat costly, including as it does a drying step which is lengthy, albeit partial only. These same drawbacks are instrumental in limiting the use of extruded ceramic body to smaller size tiles, no greater than 30x30 cm, which by extension also imposes significant limitations on the range of visual effects obtainable.

Insofar as ceramic tiles with re-entrant profiles are available, their cost tends to be somewhat high by reason of the machining operations employed in the undercutting step, which utilize diamond grit grinding wheels and dictate a requirement for more complex equipment and/or increased expenditure on fixing and laying. Such machining can dangerously weaken the structure of the ceramic body, moreover, a compromising factor avoided only by adopting a significantly deeper and prohibitively expensive thickness dimension; in effect, such tiles would be used only for applications outside the conventional industrial or trade sector.

Lastly, the method of dry-fixing tiles by means of rubber plugs is expensive in the extreme, by reason of the fact that the plugs have to be applied to the back of the tile, a costly operation involving vulcanization, for example, which is effected at the end of the production cycle; such expense is also occasioned by the complexity of the fabricated metal structure to which the tiles are secured.

Furthermore, dry-fixing tiles of the latter type do not allow for an easy and low-cost replacement of the tiled surface once in place, as any replacement operation automatically involves the accompanying inconvenience and expense of demolition.

The prior art thus stands in needs of considerable improvement with regard to overcoming the drawbacks mentioned above.

The object of the invention is to provide a mould for pressing ceramic tiles such as will allow of investing the reverse face of a tile with at least one longitudinal groove running wholly or partly the length of the body, of which the cross section exhibits at least one part with surfaces undercut in relation to the direction in which the mould is open and shut; also, a mould capable of generating such a groove to dimensional tolerances suitable for the reception of close-fitted mechanical fixing means. Moreover, the depth of groove obtainable should be up to half the thickness of the pressed tile or even more, and the mould itself functional, affording features of precision, limited wear, safe operation and reasonable cost.

A further object of the present invention is to set forth a device, on the industrial level more especially, by means of which to fix ceramic floor and wall tiles in particular, though not excluding materials of other description, in such a way at least that any deformation in the structure of the building however caused will not occasion stress on the tiles, even from vibration, resulting in unsightly and even hazardous cracks in the ceramic body.

Such a device must be simple in the extreme, hence inexpensive, immediately applicable to any type of structure without the need for preparation of the subsurface with mortars or adhesives, and ensuring notable stability over time; a device, moreover, such as will permit of replacing tiles easily and swiftly in any given circumstance.

The stated objects are fully realized in a mould for ceramic tiles according to the present invention, essential features of which are that it comprises: a die box, affording an upwardly directed surface matched to the periphery of the bottom surface of a top die and capable of movement in the vertical direction; a bottom die encompassed laterally by the box and from beneath by a profiled die plate that is slidably accommodated between the side walls of the box and capable of movement thus in a vertical direction; and at least one longitudinal insert of cross section complementary to the cross section of a groove to be formed in the reverse face of the tile, which is embodied to advantage with horizontally disposed longitudinal elements uppermost, projecting outwards from one or both sides, in such a manner as to enable the formation of a re-entrant recess with surfaces undercut in relation to the direction in which the mould opens and shuts, and of controllable geometry.

To advantage, the insert is invested during the forcing stroke with downward movement, descending in relation to the profiled die plate through a distance nominally equivalent to half the forcing stroke, and on completion of the stroke, invested with upward movement by means of elastic elements through a distance at least sufficient to ensure that the tile is distanced from the bottom die plate and can thus be removed by pushing means operating in a longitudinal direction tangentially to the die box.

Furthermore the present invention set forth a device by means of which to fix wall or floor tiles having a reverse face with at least one longitudinal groove extending the full length of the tile or for part thereof, coinciding advantageously with its median axis and exhibiting a cross section that comprises surfaces undercut in relation to an axis normal to the fixing plane and is of entirely controllable geometry and dimensions. A ceramic tile embodied in this manner also constitutes a subject matter of this invention.

The device comprises at least one longitudinal anchor strip paired prismatically with and retained by close frictional contact in the groove, which is positioned to advantage outside the plane occupied by the reverse face of the tile and embodied with splayed projecting fins insertable in corresponding re-entrant parts of the groove profile; the face of the strip opposite from the fins exhibits at least one pair of flexible appendages, positioned to best advantage near the two relative ends and insertable by means of a snap fit into corresponding slots afforded by a relative fixed longitudinal support projecting or otherwise from the fixing surface of the wall or floor.

Advantages afforded by the present invention are: the facility of creating at least one longitudinal groove in the course of the pressing cycle, of full length or otherwise, exhibiting a re-entrant cross sectional profile with controllable dimensional tolerances, in view of the need to accommodate one or more anchor elements by means of which to fix the tile mechanically to a subsurface and disallow its removal in a direction normal to the fixing plane; high manufacturing output, comparable to that obtainable with a standard process as used for shaping tiles with a cross sectional profile devoid of re-entrant surfaces; strength of the tile in mechanical fixing applications; removal of the pressed tile longitudinally from either side of the mould; the achievement of a stable mechanical interface between the body of a tile and a relative wall, in such a way as to avoid accidental movement and at the same time enable swift replacement of the tiles by detachment in a direction normal to the fixing plane; speedy assembly of the device at the moment of installation; a wide variety of visual effects obtainable by virtue of the freedom to exploit a diversity of tile sizes, including larger sizes; certainty that the integrity of the tiles will be preserved in spite of settlement and/or vibration of whatever origin in the structure of the relative building; the facility of proceeding with fixing operations even without the assistance of skilled personnel; modest outlay.

A number of preferred embodiments of the invention will now be described in detail by way of example with the aid of the ten accompanying sheets of drawings, in which:

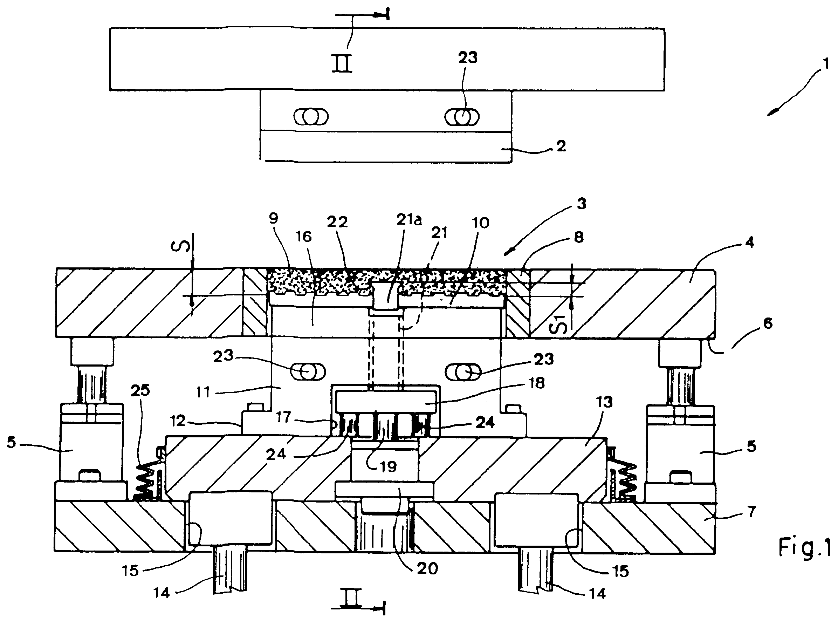

- fig 1 is a vertical cross section through the mould according to the invention, seen prior to the forcing stroke, in an embodiment designed to press a tile with a fixing groove of dovetail profile;
- fig 2 is a vertical section through the mould, as in fig 1, showing a further embodiment designed to press a tile which affords a pair of full length longitudinal fixing grooves set apart one from the other, divergently disposed and substantially of elongated triangular profile when viewed in cross section;

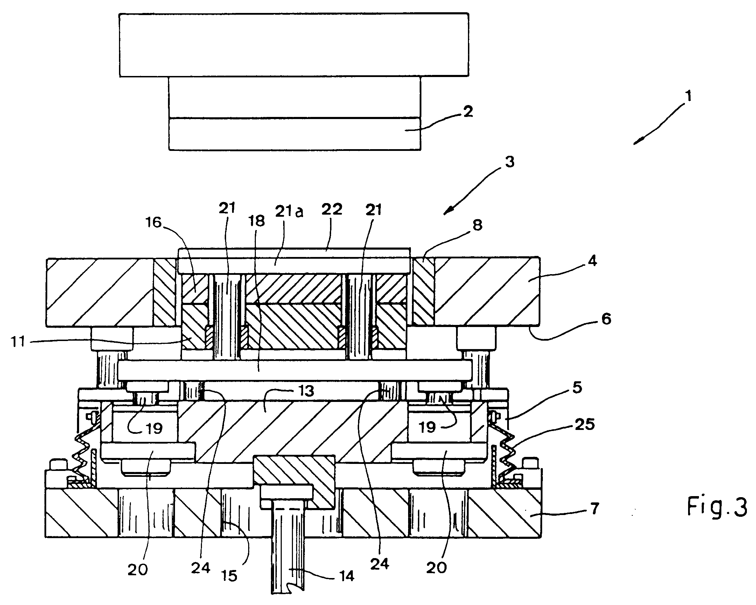

- fig 3 is the longitudinal and vertical section through III-III in fig 1;

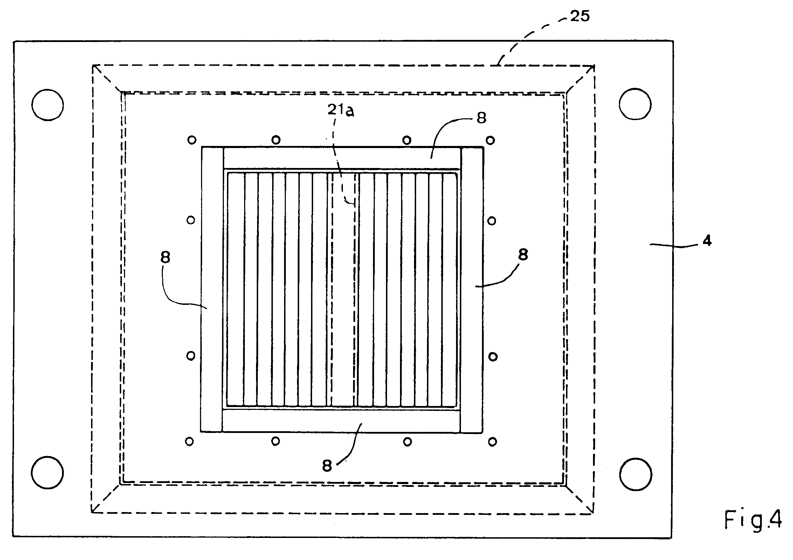

- fig 4 shows the bottom die of a mould as in fig 1, in plan from above;
- fig 5 is a detail of the mould of fig 1 viewed during the forcing stroke, in section and cutaway;
- fig 6 is a section as in fig 5, illustrating the configuration of the mould immediately prior to removal of the pressed tile;
- fig 7 is a perspective view of the reverse face of a tile affording a single centrally disposed full length longitudinal groove of dovetail profile;
- fig 8 is a perspective as in fig 7, showing a tile with two full length longitudinal fixing grooves of dovetail profile;
- fig 9 is a perspective as in fig 8, showing a tile with two grooves of elongated triangular profile set apart and divergently disposed;
- fig 10 shows the detail of one side of a groove of dovetail profile, enlarged and in cross section;
- fig 11 is a cross section as in fig 10 illustrating a fixing groove of elongated triangular profile.

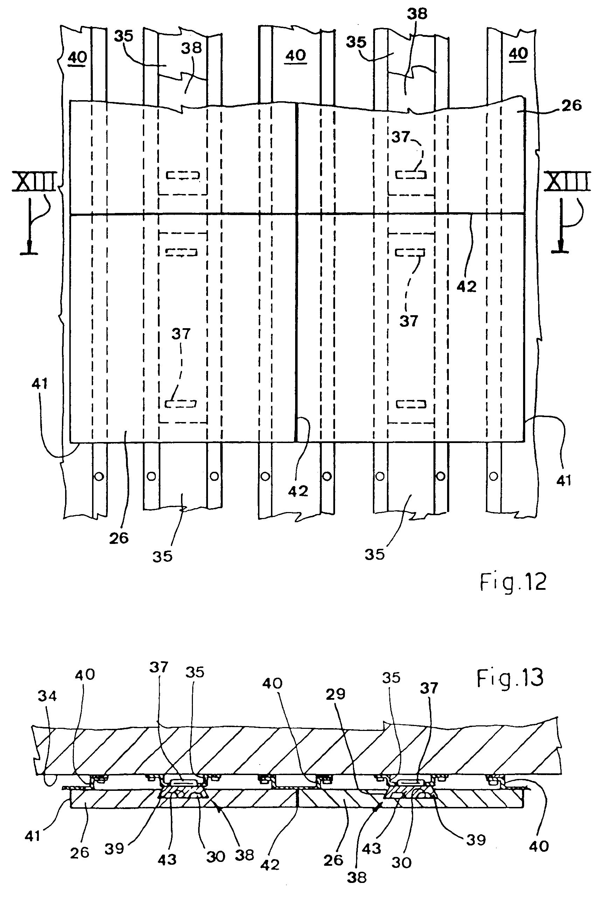

- fig 12 is the cutaway illustration of part of a surface with ceramic tiles affording a single centrally disposed longitudinal fixing groove of dovetail cross sectional profile and secured by means of the device according to the invention;
- fig 13 is the section through XIII-XIII in fig 12;
- fig 14 is a view as in fig 12, in which each tile affords two longitudinal full length fixing grooves of elongated triangular profile set apart one from the other and divergently disposed;
- fig 15 is the section through XV-XV in fig 14;
- fig 16 is the side elevation of a longitudinal anchor strip suitable for fixing tiles as in figs 7 and 8;
- fig 17 shows the strip of fig 16 assembled and in place in a section through XVII-XVII;
- fig 18 is the cross sectional illustration of an anchor strip suitable for fixing the tile of fig 9, likewise assembled and in place.

In the drawings, 1 denotes a mould according to the invention, which comprises a top die 2 and a bottom die 3 matched one to the other, both capable of movement in the vertical direction; 4 denotes the box of the bottom die 3, which is made to descend during the forcing stroke through a distance equal preferably to half the depth or thereabouts of the soft clay with which the bottom die 3 is filled, the downward movement being brought about by power cylinders 5 of which the rods are fastened to the periphery of the bottom face of the box 4 and the barrels mounted to the bed of the press (not shown in the drawings) by way of a base plate 7; the area of the impression generated by the bottom die 3 is encompassed by fillets of a hardened material 8 secured to the internal walls of the die box.
9 is the charge of soft ceramic material filling the bottom die 3, being generally of depth S twice the thickness of the pressed tile, or thereabouts.
10 denotes the die plate of the bottom die 3, which is capable of upward vertical movement slidably accommodated within the prismatic surface defined by the fillets 8 in order to bring the pressed tile into the removal position.
11 denotes a block of substantially parallelepiped embodiment supporting the bottom die plate 10 and affording a flanged base 12 secured to an elevating plate 13 associated on the underside with elevating columns 14 actuated hydraulically in such a way as to stroke vertically in clearance holes 15 afforded by the base plate 7; 16 denotes a following plate positioned between the bottom die plate 10 and the block 11 beneath, and 17 a recess formed in the bottom of the block to accommodate a cross member 18 of which the ends are secured on the underside to the rods 19 of a pair of fluid power cylinders 20 seated in relative vertical holes afforded by the elevating plate 13. 21 denotes a pair of columns rising from the top surface of the cross member 18 through respective holes afforded by the top part of the block 11 and the follower 16, serving to support a longitudinal insert 21a positioned horizontally in the bottom die 3 and capable of vertical movement, of which the cross section exhibits a dovetail profile; more exactly, the cross section of the insert is matched to that of the groove to be formed in the reverse face of the tile, and in the case of the dovetail profile comprises, at least, a pair of oppositely angled sides converging toward the reverse face.

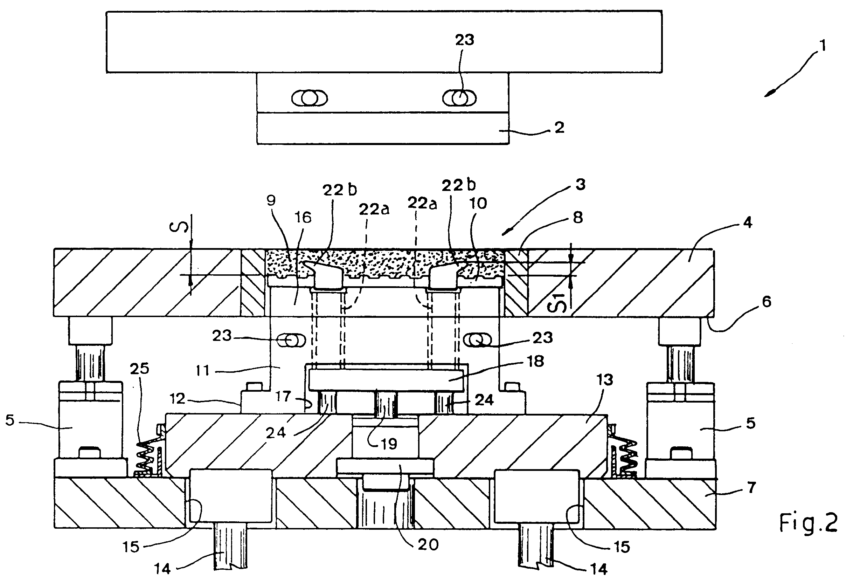

In fig 2 of the drawings, 22a denotes two pairs of columns identical to the columns 21 aforementioned, each carrying a longitudinally disposed horizontal insert 22b of which the cross section exhibits an outwardly projecting elongated triangular profile.

The top die 2 and the bottom die block 11 may also incorporate electrical resistances 23 if envisaged. 24 denotes two pairs of elastic elements positioned internally of the recess 17 afforded by the die block 11 and located between the cross member 18 and the elevating plate 13 beneath, which serve to elevate the pressed tile further on completion of the forcing stroke. 25 denotes a flexible boot enveloping the periphery of the elevating plate 13 and secured to the base plate 7, which protects the internal components of the press bed by disallowing the entry of dust.

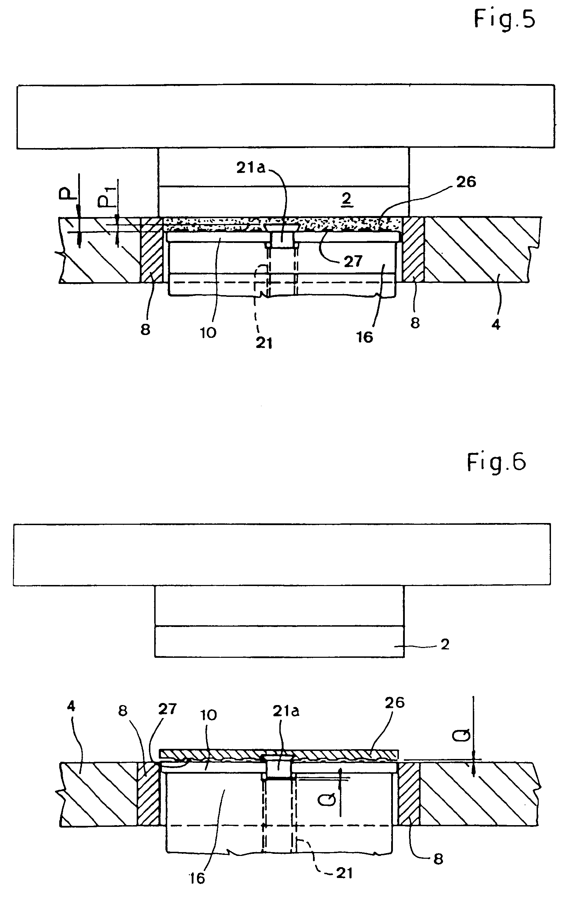

In figs 5 and 6, P denotes the depth of the pressed tile 26, typically some 8 to 14 mm or even greater, 27 a plurality of longitudinally disposed ridges afforded by the exposed surface of the die plate 10 and Q the distance, some few millimetres or tenths of a millimetre, through which the tile is raised clear of the top surface of the die box 4 when the elastic elements 24 are extended, in order to avoid damaging the reverse face when the tile is removed from the mould. S1 denotes the distance, prior to the forcing stroke, between the topmost surface of the longitudinal horizontal insert 21a or 22b and the topmost surface of the bottom die plate 10, which for preference is equivalent to approximately half the thickness S of the loose charge 9. P1 is the distance separating the topmost surfaces of the insert and the die plate following completion of the forcing stroke, which corresponds approximately to half the depth P of the pressed tile 26.

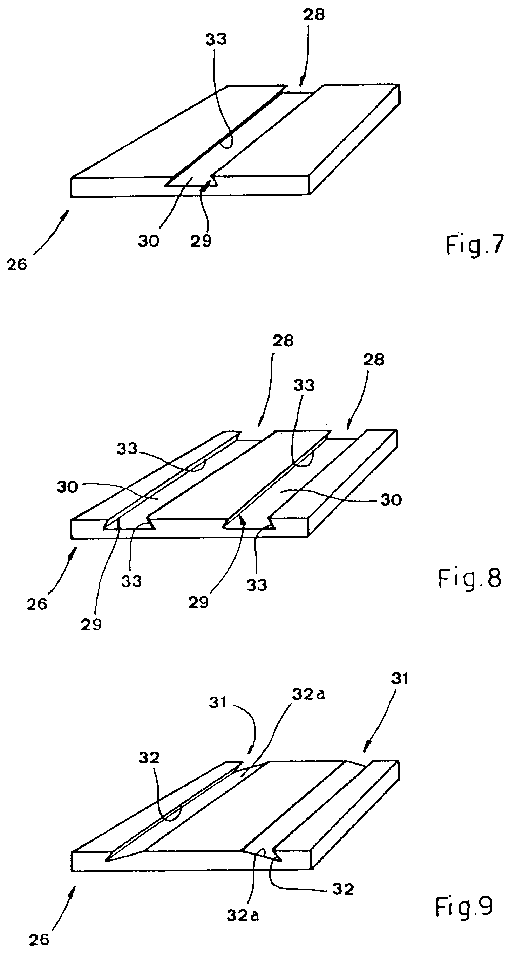

As discernible from figs 7 and 8, a full length longitudinal groove 28 of dovetail profile afforded by the reverse face of the pressed tile 26 might be single and centrally disposed, or one of a pair, respectively; 29 denotes the lateral longitudinal recesses of each groove 28, and 30 the bottom.

Fig 9 shows a pair of full length longitudinal recesses 31 set apart in mutual opposition one from another, each of which exhibits a cross section of elongated triangular profile; 32 and 32a denote the two outwardly convergent inclined surfaces that encompass the triangular groove 31, whilst 33 is the re-entrant surface in a groove 28 of dovetail profile (figs 7 and 8).

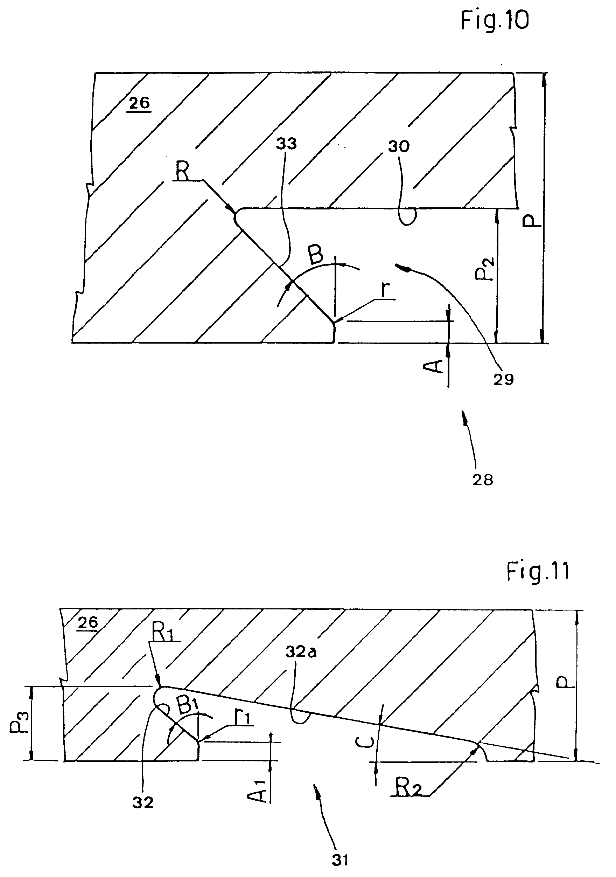

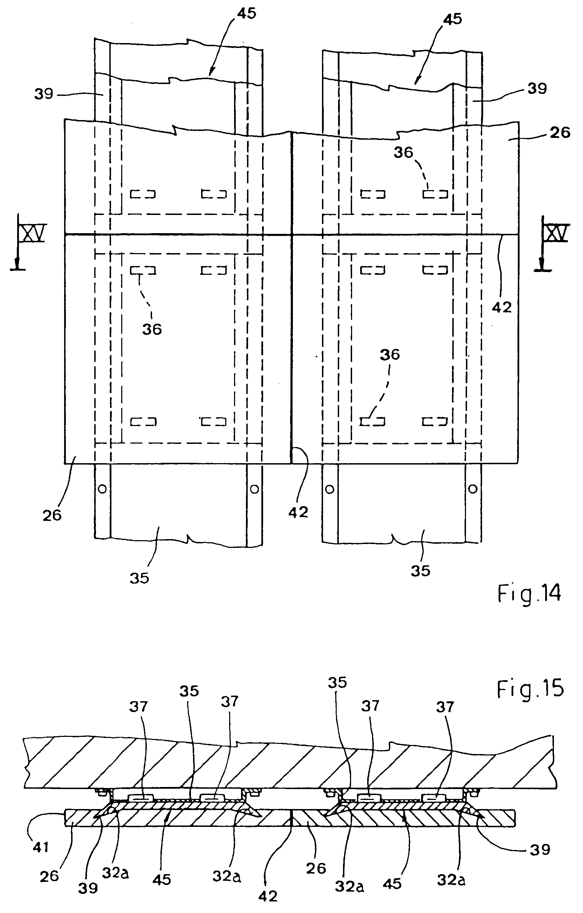

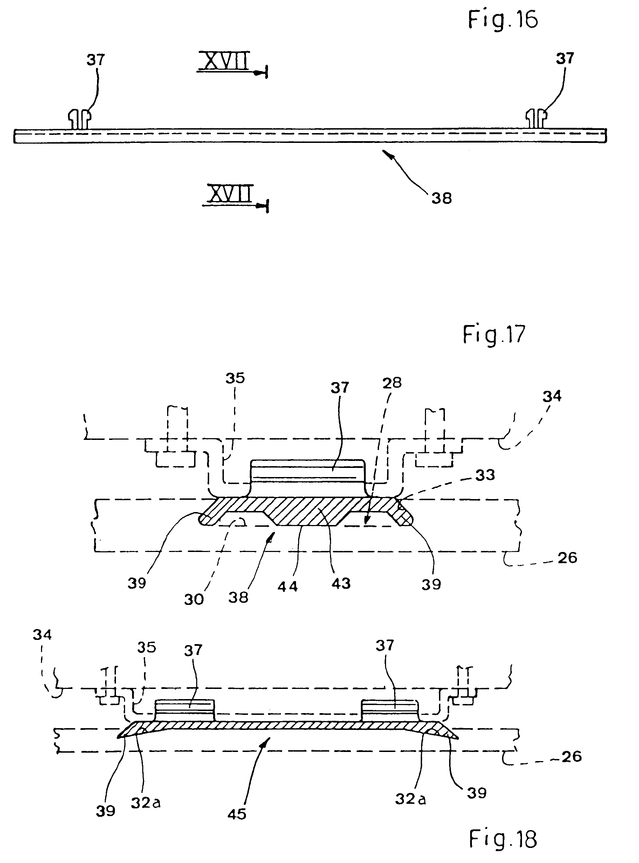

In figs 10 and 11, distances P2 and P3 denote the depth of a groove 28 with cross section of dovetail profile, and of a recess 31 of elongated triangular (scalene) profile, respectively, which to advantage will equal one half the thickness P or thereabouts; the depth of groove might be relatively greater in larger size tiles or relatively less in the case of smaller sizes. B denotes the angle formed by each re-entrant surface 33 of the dovetail groove 28 with an axis normal to the faces of the tile, which will be between 30° and 60°. R is the radius through which each re-entrant surface 33 merges with the bottom 30 of the groove 28, between 0.5 and 1 mm approx, A is the depth of the blunted outer edge of the re-entrant surface 33, between 0.5 and 1 mm, and r is the radius through which the re-entrant surface 33 merges with the blunted edge, preferably between 0.3 and 0.5 mm. B1 denotes the angle formed by the more steeply inclined surface 32 of the recess 31 and the axis normal to the faces of the tile 26, advantageously between 30° and 60°, and C the angle formed by the flatter surface 32a and the reverse face of the tile, which is between 0° and a value less than the complementary angle of B1, for example 10° where B1 = 60°. R1 and r1 denote the respective radii through which the two inclined surfaces 32 and 32a merge together, and through which the steeper surface 32 merges with the blunt edge, of which the values are equivalent to those of R and r mentioned above. A1 denotes the depth of the blunt edge, which is substantially equivalent to A above, and R2 the radius through which the flatter surface 32a meets the reverse face of the tile, of which the centre lies to advantage within the plane occupied by the reverse face and the approximate value is between 0.5 and the depth P1 of the recesses 31.
34 denotes the wall or floor subsurface to which the tile is to be fixed.
35 denotes a longitudinal support essentially of omega cross sectional profile projecting from the subsurface, of which the rear face is secured to the subsurface and the flat front face affords a plurality of transverse slots 36 (fig 14) serving to accommodate corresponding flexible appendages 37 insertable to a snap fit, advantageously in pairs, and associated with one face of a longitudinal anchor element or strip 38 of prismatic embodiment of which the remaining face exhibits a pair of splayed fins 39 destined to engage in the re-entrant lateral recesses 29 of the undercut longitudinal groove 28.
40 denotes one of a plurality of longitudinal elements alternated with the supports 35, against which the longitudinal edges 41 of the tiles are set flush in such a way as to prevent the body from rocking in relation to the fixing plane.
42 denotes a material, for example grouting plaster, adhesive, or even a silicon sealing compound, etc., by means of which to fill the gaps between adjacent tiles 26.
43 denotes a longitudinal rib extending centrally along the front face of the anchor strip 38 and affording a flat frontal locating surface 44 (see fig 17) positioned to breast with a corresponding central band of the bottom 30 of the groove 28.
45 denotes a longitudinal anchor strip similar to the strip 38 described above, though without the centre rib and with the middle part of its cross sectional profile lying externally of or within the plane occupied by the reverse face of the tile, of which the fins 39 are insertable in corresponding re-entrant spaces embodied as two longitudinal recesses 31 (fig 9) afforded by the reverse face of the tile body.

Operation of the mould will now be described.

With the charge of soft clay 9 dispensed into the bottom die 3, the top die 2 is lowered onto the top surface of the die box 4, and more exactly onto the surround fillets 4, whereupon top die 2 and box 4 together descend further through a distance equal approximately to half the depth of the charge 9, and the insert 21a or 22b descends likewise through a distance equal approximately to half the travel accomplished by the top die 2 and box 4.

On completion of the forcing stroke, the top die 2 ascends whereas the die box 4 remains in the lower limit position and the insert 21a or 22b is raised by the combined action of the cylinders 20 and the elastic elements 24 to the point at which the reverse face of the pressed tile lies marginally above the topmost surface of the box 4, thereby enabling the separation of the tile from the insert by means of a push rod (not illustrated) stroking tangentially to the die box in the longitudinal direction; thereafter, the box reascends and the cycle is repeated.

The fixing device is used as follows:
having secured the longitudinal supports 35 to the subsurface 34, preferably in parallel lines spaced apart at a distance corresponding to the transverse dimension of the tile 26 (likewise the longitudinal locating elements 40 if envisaged, alternated with the supports 35), and positioned the longitudinal anchor strips 38 or 45 in the relative grooves 28 or recesses 31 afforded by the reverse faces of the tiles 26, the flexible appendages 37 are snapped into the relative slots 36 of the supports 35 to fix the tiles in place.

In practice, the materials and dimensions adopted, and the details of the design, might be other than as described and illustrated, remaining equivalent nonetheless in terms of the art and staying within the bounds of protection envisaged hereunder.

The ultimate shape exhibited by the longitudinal insert 21' or 22'', when viewed in cross section, and therefore of the corresponding groove 28 or 31, might be other than as described and illustrated; for example radius R2 might be widened to the point of creating an open sided figure substantially of trapezoidal or at all events of polygonal shape, in which at least one surface profile is undercut in relation to the direction through which the mould opens and shuts.

Moreover, the topmost central part of the outline of the re-entrant cross section might be lowered even to the point of coinciding with the reverse face of the tile.

The anchor strip 38 or 45 for a tile other than pressed ceramic might be substantially equivalent in length to the groove 28 or recess 31, or embodied in discrete lengths less than half the overall length and positioned at each end of the groove, the full length groove being necessary in the case of a pressed ceramic tile by reason of the need to separate the tile from the insert in a direction tangential to the mould. Similarly, the fins 39 might extend along a limited part of the overall length of the anchor strip only, or along discrete lengths of the strip. Again, the grooves 28 need not necessarily extend the full length of the tile.

Furthermore, the cross sectional contours of the anchor strip might be matched to those of the groove afforded by the tile in such a way as to obtain a tight fit through frictional contact.

Lastly, the flexible appendages 37 might be replaced by flexible elements of different embodiment and insertable in geometrically matched slots 36.

## Claims

1. A mould for ceramic tiles affording a re-entrant groove in the reverse face for mechanical fixing purposes, comprising a die box (4), affording an upwardly directed surface matched to the periphery of the bottom surface of a top die (2) and capable of movement through a vertical direction, and a bottom die (3) encompassed laterally by fillets (8) applied to the relative internal side walls of the die box, characterized
- in that the shape generated by the bottom die (3) is defined on the downward facing side by a die plate (10) with a surface preferably of undulated profile, slidably accommodated between the side walls of the die box and capable of movement thus in a vertical direction, in conjunction with at least one horizontally disposed longitudinal insert projecting upward from the die plate and embodied with longitudinal shaping elements uppermost that project outward on one or both sides;
- in that the insert is invested during the forcing stroke with downward movement, so as to descend in relation to the die plate (10) through a distance nominally equivalent to half the forcing stroke, and on completion of the stroke, invested with upward movement by means of a plurality of elastic elements (24) in such a way as to bring about its ascent through a distance sufficient at least to ensure clearance between the pressed tile (26) and the die plate in readiness for removal of the tile in a direction tangential to the die box.

2. A mould as in claim 1, wherein the die box (4) containing the bottom die (3) is caused to descend during the forcing stroke by power cylinders (5) of which the rods are secured to the periphery of the underside of the box and the barrels secured to the press bed by way of a base plate (7).

3. A mould as in claim 2, wherein the descent of the die box (4) during the forcing stroke is equal approximately to half the thickness (S) of the charge of unpressed ceramic material (9) initially occupying the bottom die (3).

4. A mould as in claim 1, wherein the horizontally disposed longitudinal insert is of cross section such as to generate a re-entrant groove of dovetail profile and carried on a plurality of columns (21), preferably two in number, extending upward through holes afforded by a bottom die block (11) from the top surface of a supporting cross member (18), located internally of a recess (17) afforded by the lower part of the block, of which the ends are associated with the rods (19) of a pair of fluid power cylinders (20) beneath, secured in respective through holes afforded by an elevating plate (13) supported in its turn on elevating columns (14) freely accommodated in holes (15) afforded by the base plate (7) and capable of movement thus in the vertical direction, the elastic elements (24) being arranged advantageously in two pairs and located between the bottom surface of the cross member (18) and the base plate (7).

5. A mould as in claim 1, wherein each horizontally disposed longitudinal insert is of cross section such as to generate a re-entrant groove of outward projecting elongated triangular profile and carried on a plurality of columns (22a), preferably two in number, extending upward through holes afforded by a bottom die block (11) from the top surface of a supporting cross member (18), located internally of a recess (17) afforded by the lower part of the block, of which the ends are associated with the rods (19) of a pair of fluid power cylinders (20) beneath, secured in relative through holes afforded by an elevating plate (13) supported in its turn on elevating columns (14) freely accommodated in holes (15) afforded by the base plate (7) and capable of movement thus in the vertical direction, the elastic elements (24) being arranged preferably in two pairs and located between the bottom surface of the cross member (18) and the base plate (7).

6. A mould as in claim 4, wherein the cross section of the insert comprises a pair of upwardly divergent inclined sides, rectilinear or otherwise, of which the bottom ends are merged with the relative column (21) and the topmost ends interconnected by a side of which the central part at least is horizontally disposed.

7. A mould as in claim 6, wherein the top side of the cross section is of angular, rectilinear or mixed linear profile and disposed such that the central part is compassed within the thickness of the relative tile.

8. A mould as in claim 5, wherein the cross section of each insert comprises least one pair of convergent rectinilear or curvilinear sides merged at bottom with at least one relative pair of columns (22a).

9. A ceramic tile pressed in a mould as in preceding claims, characterized in that the reverse face exhibits a longitudinal groove extending wholly or partly the length of the ceramic body, of which the cross sectional profile generated by the profile of the longitudinal insert comprises at least one pair of inclined sides (33) converging toward a point located externally of the tile and is of depth (P2) up to half the depth (P) of the pressed ceramic body or even deeper.

10. A ceramic tile pressed in a mould as in preceding claims, characterized in that the reverse face exhibits at least one longitudinal groove extending wholly or partly the length of the ceramic body, of which the cross sectional profile generated by the profile of the longitudinal insert comprises at least one pair of sides (30, 33; 32, 32a) converging toward a point located externally of the tile and is of depth (P3) up to half the depth (P) of the ceramic body or even deeper.

11. A ceramic tile as in claim 9 affording a groove (28) of which the cross section exhibits dovetail profile, wherein the angle (B) formed by the single undercut surface (33) of the groove with an axis normal to the faces of the tile is between 30° and 60°, the radius (R) through which the undercut surface (33) is merged with the bottom (30) of the groove (28) is nominally between 0.5 and 1 mm, the depth (A) of a blunted edge at the meeting of the undercut surface (33) and the reverse face of the tile is nominally between 0.5 and 1 mm, and the radius (r) through which the undercut surface (33) merges with the blunted edge measures between 0.3 and 0.5 mm.

12. A ceramic tile as in claim 10 affording a groove (31) of which the cross section is substantially of elongated triangular profile with one side open, wherein the angle (B1) formed by the more steeply inclined surface (32) of the profile with an axis normal to the faces of the tile (26) is between 30° and 60°, the angle (C) formed by the more gently inclined surface (32a) of the profile with the reverse face of the tile is between 0° and a value less than the complementary angle of the re-entrant angle (B1), advantageously 10° where B1 = 60°, the radius (R1) through which the more steeply inclined surface (32) merges with the more gently inclined surface (32a) is nominally between 0.5 and 1 mm, the radius (r1) through which the more steeply inclined surface (32) merges with a blunted edge (A1) at its meeting with the reverse face of the tile is nominally between 0.3 and 0.5 mm, the depth of the blunted edge between 0.5 and 1 mm, and the radius (R2) through which the more gently inclined surface (32a) meets the reverse face of the tile, centred preferably on a point within the plane occupied by the reverse face, between 0.5 and 1 mm or thereabouts.

13. A device for fixing wall and floor tiles by mechanical means, in particular ceramic tiles with a re-entrant profile, characterized
- in that it comprises a longitudinal anchor element or strip of essentially prismatic embodiment paired prismatically with and retained by close frictional contact in a corresponding groove provided with at least one surface undercut in relation to an axis normal to the fixing plane;
- in that a central part of the cross sectional profile of the strip is positioned wholly or partly outside the plane occupied by the reverse face of the tile (26) and flanked by splayed projecting fins insertable longitudinally in corresponding undercut lateral recesses afforded by the relative groove;
- in that the rear face presented by the prismatic body of the strip affords at least one pair of flexible appendages (37) insertable by means of a snap fit into corresponding slots (36) afforded by the body of a respective longitudinal support (35), preferably of omega cross sectional profile and in any event projecting from the subsurface (34) of the wall or floor to which the tiles are fixed; and,
- in that the depth (P, P1) of the groove is equal preferably to half the thickness (S) of the tile or thereabouts.

14. A device as in claim 13, wherein the groove (28) is of dovetail profile, and the longitudinal anchor strip (38) embodied with a longitudinal rib (43) that extends centrally along the front face of the relative cross sectional profile and affords a locating surface (44) positioned to breast with a central band of the bottom surface (30) of the groove (28).

15. A device as in claim 13, wherein the groove consists in two recesses (31) spaced apart one from the other, and the longitudinal anchor strip (45) is embodied with a central part of its cross sectional profile located externally of the plane occupied by the reverse face of the tile (26) and with splayed fins (39) of elongated triangular cross section.

16. A device as in claim 13, wherein the supports (35) are alternated with further elements (40) against which to locate the longitudinal edges (41) of the tiles (26).

17. A device as in claim 13 and claim 14, comprising a longitudinal anchor strip (38) insertable into a groove (28) of dovetail profile with longitudinal undercut recesses (29), afforded by the tile (26), wherein the angle (B) formed by the single undercut surface (33) of the groove with an axis normal to the faces of the tile is between 30° and 60°, the radius (R) through which the undercut surface (33) is merged with the bottom (30) of the groove is nominally between 0.5 and 1 mm, the depth (A) of a blunted edge at the meeting of the undercut surface (33) and the reverse face of the tile is nominally between 0.5 and 1 mm, and the radius (r) through which the undercut surface (33) merges with the blunted edge is between 0.3 and 0.5 mm.

18. A device as in claim 13 and claim 15, comprising a longitudinal anchor strip (45) insertable into longitudinal recesses (31) of elongated triangular profile afforded by the tile (26), wherein the angle (B1) formed by the more steeply inclined surface (32) of the triangular profile with an axis normal to the faces of the tile is between 30° and 60°, the angle (C) formed by the more gently inclined surface (32a) of the profile with the reverse face of the tile is between 0° and a value less than the complementary angle of the re-entrant angle (B1), advantageously 10° where B1 = 60°, the radius (R1) through which the more steeply inclined surface (32) merges with the more gently inclined surface (32a) is between 0.5 and 1 mm, the radius (r1) through which the more steeply inclined surface (32) merges with a blunted edge (A1) at its meeting with the reverse face of the tile is between 0.3 and 0.5 mm, the depth of the blunted edge measures between 0.5 and 1 mm, and the radius (R2) through which the more gently inclined surface (32a) meets the reverse face of the tile, centred preferably on a point within the plane occupied by the reverse face, is between 0.5 and 1 mm or thereabouts.
